# EUROPÄISCHE PATENTSCHRIFT

(11) **EP 0 844 043 B1**
(45) Veröffentlichungstag und Bekanntmachung des Hinweises auf die Patenterteilung: **14.11.2001**
(21) Anmeldenummer: 97116609.5
(22) Anmeldetag: 24.09.1997
(51) Int. Cl.: B23K 37/04

(54) **Verfahren zum Verlöten von Teilen aus lötbaren Werkstoffen**
Brazing method of solderable elements
Méthode de brasage pour materiaux soudables

(30) Priorität: 25.11.1996 DE 19648546
(43) Veröffentlichungstag der Anmeldung: 27.05.1998
(73) Patentinhaber: Fontargen GmbH, 67304 Eisenberg (DE)
(72) Erfinder: Demmler, Axel Dr., 67269 Grünstadt (DE); Müller, Horst Ulrich, 58791 Werdohl (DE)
(74) Vertreter: Köchling, Conrad-Joachim

(56) Entgegenhaltungen:
- BE-A- 694 140
- US-A- 3 963 162
- US-A- 5 224 691
- PETER F.WOODS: "Aids for manual MIG welding" METALWORKING PRODUCTION, Bd. 111, Nr. 27, 5.Juli 1967, Seiten 51-52, XP002057233

## Beschreibung

Die Erfindung betrifft ein Verfahren zum Verlöten von Teilen aus Werkstoffen, die zum Verlöten geeignet sind, gemäß Oberbegriff des Anspruches 1.

Im Stand der Technik ist es üblich Werkstücke aus lötbaren Werkstoffen beispielsweise im Wege der Spaltlötung miteinander zu verbinden. Hierzu wird bisher das Lot in Form von Pulver, Paste, Lotformteilen (Ringe, Spangen, Lotdrahtabschnitte) an den zu verbindenden Werkstücken deponiert. Die Werkstücke selbst müssen, um sie lagerichtig zueinander zu halten, vorfixiert werden. Dazu werden die Werkstücke bisher an der Stoßstelle miteinander punktverschweißt oder mit dem MIG/MAG-Verfahren oder WIG-Verfahren verschweißt. Diese Anordnung ist einerseits optisch störend und andererseits technisch nachteilig, weil der Lötspalt im Bereich der Schweißpunkte oder des Schweißpunktes unterbrochen ist. Hierdurch wird das Ausfüllen des Lotspaltes durch das geschmolzene Lot behindert. Auch entstehen Anlauffarben (Oxide) im Schweißbereich auf den entsprechenden Werkstücken, die die Benetzung der Fügefläche durch das geschmolzene Lot behindern. Die Anordnung der Lotdepots ist ebenfalls nachteilig, weil beispielsweise bei Lotformteilen in Form von Ringen nur eine kleine Anlagefläche an dem Werkstück zur Verfügung steht, so daß eine schlechte Wärmeleitung in den Lotzusatzwerkstoff erfolgt. Das gleiche Problem tritt auch bei Lötpaste und Lotpulver auf, da diese Paste kein homogener Körper ist. Nachteilig ist zudem, daß eine Lotdeponierung mit gleichzeitiger Lagefixierung der Werkstücke nicht möglich ist. Der Aufwand für die Lotbeschichtungen ist entsprechend hoch. Auch ist eine kurzfristige Änderung der Lotmenge nicht oder nur mit Aufwand möglich. Schließlich kann auch der Lotzusatzwerkstoff unbeabsichtigt seine Lage ändern.

Aus der US 5,224,691 ist ein gattungsgemäßes Verfahren bekannt. Dabei sind Glasstücke mit einem Saum aus Kupferband ausgestattet, so daß das Kupferband eine Basis für das Verlöten in dem zwischen den Teilstücken verbleibenden Spalt bildet. Das Kupferband wird im Spaltbereich zum Zwecke des Platzhaltens in einem kleinen Bereich verlötet, wozu Lot aufgebracht und mittels Lötkolben verflüssigt wird, so daß in punktuellen Bereichen eine Verbindung zwischen den benachbarten Kupferbandbereichen gebildet ist. Anschließend erfolgt dann die Verlötung durch Lötmetall mit einem Lötkolben.

Ausgehend von diesem Stand der Technik liegt der Erfindung die Aufgabe zugrunde, ein Verfahren gattungsgemäßer Art zu schaffen, bei dem in einfacher Weise ein Lotdepot in beliebiger Menge vorgesehen werden kann, wobei zudem die Fixierung der durch Verlötung miteinander zu verbindenden Teile vereinfacht wird und die in der Beschreibungseinleitung angegebenen Nachteile vermieden sind.

Die Lösung dieser Aufgabe ist im Anspruch 1 angegeben. Vorteilhafte Weiterbildungen sind in den Unteransprüchen bezeichnet.

Durch die erfindungsgemäße Verfahrensweise werden die Nachteile des Standes der Technik vermieden. Lötzusatzwerkstoffe sind vorzugsweise metallische Legierungen, die beispielsweise als Endlosdrähte oder Stabe gefertigt werden. Mit Hilfe eines entsprechenden Gerätes, beispielsweise eines Drahtvorschubgerätes ist es möglich, einen derartigen Endlosdraht oder einen Stab in eine Elektrode eines Schweißgerätes zu fördern und/oder in einen Lichtbogen einer Schweißstromquelle zu fördern. Hierdurch kann der Lotzusatzwerkstoff aufgeschmolzen werden. Zwischen der Werkstoffoberfläche der Werkstoffes und der metallischen Legierung des Lotzusatzwerkstoffes beziehungsweise der Elektrode kann mittels geeigneter Geräte, vorzugsweise Schweißstromquellen, ein Lichtbogen, vorzugsweise ein Impulslichtbogen gezündet werden. Hierdurch wird ein Übergang der geschmolzenen Lotlegierung auf die Oberfläche des Werkstückes eingeleitet. Die Lichtbogentemperatur bewirkt dabei eine Aktivierung der Oberfläche am Deponierungsort. Eine in derartiger Art und Weise auf der Oberfläche des Werkstückes deponierte metallische Legierung (Lot) ist bei einem nachfolgenden Schmelzlöten in der Lage, einen Montagespalt auszufüllen und/oder eine Oberfläche zu beschichten. Wird der auf derartig Weise abgeschiedene Lotzusatzwerkstoff homogen aufgebracht, ist eine Lagefixierung der zu fügenden Teile aneinander möglich. Die Erwärmung des Lotzusatzwerkstoffes auf Arbeitstemperatur wird durch die kohäsive und adhäsive Bindung des abgeschiedenen Lotzusatzwerkstoffes verbessert. Insbesondere ist wesentlich und vorteilhaft, daß die Lotmenge in einfacher Weise verändert werden kann, indem eine entsprechende Menge von Zusatzwerkstoff aufgeschmolzen wird. Das Lot kann in einfacher Weise im Bereich der Lötstelle in Form eines Punktes oder einer Raupe abgeschieden werden, wobei durch das abgeschiedene Lot auch die Teile aneinander fixiert werden können. Dabei erfolgt die Fixierung vorzugsweise nach Art einer Schweißung, so daß die zu verlötenden Werkstücke aneinandergeheftet sind. Dadurch, daß das Lot selbst als "Schweißmittel" zum Heften verwendet wird, entsteht kein Schweißpunkt, wie bei der bisherigen Art der Heftung, was zur Behinderung der Zuführung von Lot zum Lotspalt führen könnte. Auch tritt eine Unterbrechung des Lötspaltes in dem Heftungspunkt nicht ein, so daß diese optische Störung vermieden ist. Zudem treten auch keine Anlauffarben in dem Bereich auf, in welchem das Lötdepot auf dem Werkstück oder den Werkstücken abgeschieden wird. Die Anwendungsfälle für das erfindungsgemäße Verfahren sind vielfältig. Beispielsweise können insbesondere im Automobilbau benötigte Teile miteinander verbunden werden, so beispielsweise Leitungen aus Stahl oder anderen Metallen. Es können auch Halter oder Abzweigungen oder dergleichen in einfacher Weise an Rohren, Leitungen oder dergleichen angelötet werden. Ein Ausführungsbeispiel der Erfindung ist in der Zeichnung dargestellt und nachstehend näher beschrieben. Es zeigt:

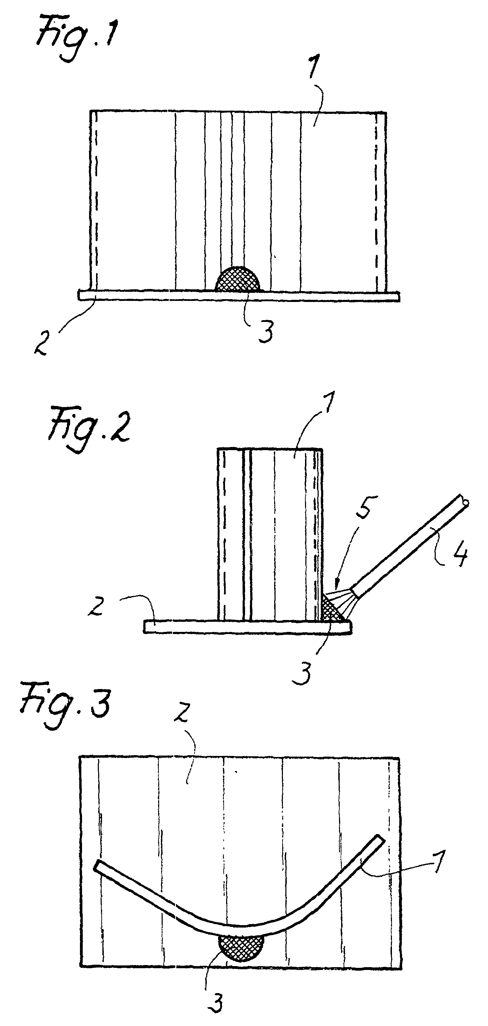

- Figur 1 bis 3: zwei durch Lötung miteinander zu verbindende Werkstücke in Frontansicht, Seitenansicht und Draufsicht gesehen.

Anhand der Zeichnung ist das Verfahren zum Verlöten von Teilen 1,2 aus Werkstoffen, die zum Verlöten geeignet sind, erläutert. Im Ausführungsbeispiel sind zwei zu verbindende Teile 1,2 vorgesehen, die lagerichtig zueinander angeordnet sind und miteinander im Bereich der Stoßstelle einen Lötspalt bilden. Ein Lotdepot 3 an Lot ist im Bereich der Lötstelle positioniert. Dieses Lot kann aufgeschmolzen werden und die Lötverbindung nach Art einer Spaltlötung erzeugt werden.

Erfindungsgemäß ist das Lotdepot 3 durch Lot gebildet, welches in einem Teilbereich der Lötstelle schmelzflüssig abgeschieden wird und anschließend erstarrt. Es entsteht dabei eine Anhäufung in Bergform, wie aus den Zeichnungsfiguren 1 bis 3 ersichtlich. Die so vorbereiteten Teile 1,2 werden mit dem Lötdepot 3 in einem üblichen Lötverfahren verlötet.

Die Menge an Lot, welches das Lotdepot 3 bildet, ist vorzugsweise gleich der Menge an Lot, die zur Verlötung benötigt wird. Sofern sich bei der Handhabung des Verfahrens herausstellt, daß die das Lotdepot 3 bildende Menge an Lot zu gering oder zu groß ist, so ist in einfacher Weise die Lotdepotmenge zu verändern.

Mittels des das Lotdepot 3 bildenden Lotes werden die zu verlötenden Teile 1,2 in einem Teilbereich der Lötstelle miteinander nach Art einer Schweißung verbunden, wobei die so aneinandergehefteten Teile 1,2 in einem üblichen Lötverfahren anschließend verlötet werden, so daß das Lot des Lotdepots 3 über die gesamte Lötstelle verläuft.

Vorzugsweise kann das Lot in Form eines Zusatzwerkstoffes zur Anwendung für ein nachfolgendes Schmelzlöten mit einem Aktivierungsmedium unter Anwendung einer Schweißstromquelle in einem punktuellen Bereich der Lötstelle deponiert werden, indem der Zusatzwerkstoff durch einen zwischen einer Elektrode 4 und der Oberfläche der Werkstücke 1,2 gezündeten Lichtbogen 5 aufgeschmolzen und auf der Oberfläche der zu fügenden Teile unverlierbar abgeschieden wird. Dabei wird durch die Temperatur des Lichtbogens 5 eine Aktivierung der Gefügeteiloberfläche am Deponierungsort des Lotdepots 3 eingeleitet. Die Haftung des abgeschiedenen Lotes im Bereich des Lotdepots 3 auf der Werkstückoberfläche erfolgt durch kohäsive und adhäsive Bindungen. Hierdurch wird die Erwärmung des Lotzusatzwerkstoffes auf Arbeitstemperatur beim anschließenden Verlöten verbessert. Im Ausführungsbeispiel werden die beiden im Wege der Spaltlötung zu verbindenden Werkstücke 1,2 so vorbereitet, daß das Lot als Lotdepot 3 punktuell in einem Bereich neben dem Lötspalt abgelegt und aufgebracht und die Werkstücke 1,2 durch das so gebildete Lotdepot miteinander schweißartig verbunden werden. Die Teile sind damit aneinander fixiert und können gehandhabt: werden. Nachfolgend können die Teile 1,2 in üblicher Weise verlötet werden, wobei das Material des Lotdepots 3 verflüssigt wird und den Lötspalt durch kapillaren Fülldruck füllt.

Die Erfindung ist nicht auf das Ausführungsbeispiel beschränkt, sondern im Rahmen der Offenbarung vielfach variabel.

## Patentansprüche

1. Verfahren zum Verlöten von Teilen (1,2) aus Werkstoffen, die zum Verlöten geeignet sind, wobei die zu verbindenden Teile (1,2) lagerichtig zueinander angeordnet und vorzugsweise unter Bildung eines Lötspaltes vorfixiert werden, ein Lotdepot (3) an Lot im Bereich der Lötstelle positioniert wird und nachfolgend das Lot aufgeschmolzen und die Lötverbindung hergestellt wird, wobei das Lotdepot (3) durch Lot gebildet wird, welches in einem Teilbereich der Lötstelle Schmelzflüssig abgeschieden wird und anschließend erstarrt, und daß die so vorbereiteten Teile (1,2) mit dem Lotdepot (3) in einem üblichen Lötverfahren verlötet werden, **dadurch gekennzeichnet, daß** das Lot in Form eines zusatzwerkstoffes zur Anwendung für ein nachfolgendes Schmelzlöten mit einem Aktivierungsmedium unter Anwendung einer Schweißstromquelle in einem punktuellen Bereich der Lötstelle deponiert wird, indem der Zusatzwerkstoff durch einen zwischen einer Elektrode (4) und Werkstückoberfläche gezündeten Lichtbogen (5) aufgeschmolzen und auf der Oberfläche der zu fügenden beziehungsweise zu verlötenden Teile (1,2) unverlierbar abgeschieden wird.

2. Verfahren nach Anspruch 1, **dadurch gekennzeichnet, daß** die Menge an Lot, welches das Lotdepot (3) bildet, etwa gleich der Menge an Lot ist, die zur Verlötung benötigt wird.

3. Verfahren nach Anspruch 1 oder 2, **dadurch gekennzeichnet, daß** mittels des das Lotdepot (3) bildenden Lotes die zu verlötenden Teile (1,2) in einem Teilbereich der Lötstelle miteinander nach Art einer Schweißung verbunden werden, wobei die so aneinander gehefteten Teile (1,2) in einem üblichen Lötverfahren verlötet werden, so daß das Lot über die gesamte Lötstelle verläuft.

4. Verfahren nach einem der Ansprüche 1 bis 3, **dadurch gekennzeichnet, daß** durch die Lichtbogentemperatur eine Aktivierung der Fügeteiloberteilfläche am Deponierungsort eingeleitet wird.

5. Verfahren nach einem der Ansprüche 1 bis 4, **dadurch gekennzeichnet, daß** die Haftung des abgeschiedenen Lotes auf der Werkstückoberfläche durch kohäsive und/oder adhäsive Bindungen erfolgt.

6. Verfahren nach einem der Ansprüche 1 bis 5, **dadurch gekennzeichnet, daß** bei zwei im Wege der Spaltlötung zu verbindenden Werkstücken das Lot als Lotdepot (3) punktuell in einem Bereich neben dem Lötspalt abgelegt und die Werkstücke durch das so gebildete Lotdepot (3) miteinander schweißartig verbunden werden und nachfolgend die Teile (1,2) in üblicher Weise verlötet werden, wobei das Material des Lötdepots (3) verflüssigt wird und den Lötspalt vorzugsweise durch kapillaren Fülldruck füllt.

7. Verfahren nach einem der Ansprüche 1 bis 6, **dadurch gekennzeichnet, daß** die Verlötung der Teile (1,2) oder Werkstücke im Wege der Ofenlötung oder Widerstandslötung vorzugsweise unter Schutzgasatmosphäre erfolgt.

## Claims

1. A process for soldering parts (1, 2) made from materials which are suitable for soldering, whereby the parts (1, 2) to be connected to one another are arranged in the correct position in relation to one another and are preliminarily fixed with the formation of a close joint, a deposition of solder (3) is positioned in the region of the soldered joint and subsequently the solder is melted on and the soldered joint is produced, whereby the deposition of solder (3) is formed by solder which is deposited in molten form in a sub-region of the soldered joint and is then solidified, and that the parts (1, 2) prepared in this manner are soldered with the deposition of solder (3) in a normal soldering process,
**characterised in that** the solder is deposited in the form of a filler metal for use for a subsequent fusion soldering with an activation medium by using a welding current source in a particular region of the soldered joint, by the filler metal being melted on by an arc (5) ignited between an electrode and the workpiece surface and being permanently deposited on the surface of the parts (1, 2) to be joined and respectively to be soldered.

2. A process according to Claim 1,
**characterised in that** the amount of solder forming the deposition of solder (3) is roughly equal to the amount of solder required for soldering.

3. A process according to Claim 1 or 2,
**characterised in that** the parts (1, 2) to be soldered are joined to one another by means of the solder forming the deposition of solder (3) in a sub-region of the soldered joint in the manner of a weld, the parts (1, 2) attached to one another in this manner being soldered in a normal soldering process, so that the solder runs over the entire soldered joint.

4. A process according to one of Claims 1 to 3,
**characterised in that** an activation of the surface of the upper part of the joint is initiated at the deposition site by the arc temperature.

5. A process according to one of Claims 1 to 4,
**characterised in that** the adhesion of the deposited solder to the surface of the workpiece takes place by cohesive and/or adhesive bonds.

6. A process according to one of Claims 1 to 5,
**characterised in that** in the case of two workpieces to be joined in the course of close joint soldering, the solder is deposited in dots as the deposition of solder (3) in a region next to the close joint and the workpieces are joined to one another like a weld by the deposition of solder (3) formed in this manner and subsequently the parts (1, 2) are soldered in the normal manner, the material of the deposition of solder (3) being liquefied and filling the close joint preferably by capillary filling pressure.

7. A process according to one of Claims 1 to 6,
**characterised in that** the soldering of the parts (1, 2) or workpieces takes place in the course of the furnace soldering or resistance soldering, preferably in a protective atmosphere.

## Revendications

1. Procédé pour le brasage de parties (1,2) à base de matériaux qui sont appropriés pour le brasage, les parties (1,2) à relier étant disposées dans une position correcte l'une par rapport à l'autre et étant préfixées de préférence en formant une fente de soudage, un dépôt (3) de brasure étant positionné dans la zone de l'endroit de brasage et la brasure étant fondue ensuite et l'assemblage par brasage étant établi, le dépôt de brasage (3) étant formé par de la brasure, qui est déposée en fusion dans une zone partielle de l'endroit de brasage et est ensuite solidifiée, et les parties (1,2) ainsi préparées étant brasées avec le dépôt de brasage (3) avec un procédé de brasage classique, **caractérisé en ce que** la brasure est déposée sous la forme d'un matériau d'apport pour être utilisé pour un brasage par fusion consécutif avec un agent d'activation en utilisant une source de courant de soudage dans une zone ponctuelle de l'endroit de brasage, le matériau d'apport étant fondu par un arc électrique (5) allumé entre une électrode (4) et la surface d'une pièce et étant déposé de façon imperdable sur la surface des parties (1,2) à assembler, respectivement à souder.

2. Procédé selon la revendication 1, **caractérisé en ce que** la quantité de brasure, qui forme le dépôt de brasage (3), est à peu près égale à la quantité de brasure qui est nécessaire pour le soudage.

3. Procédé selon la revendication 1 ou 2, **caractérisé en ce que**, au moyen de la brasure formant le dépôt de brasage (3), les parties (1,2) à souder sont reliées entre elles à la façon d'une soudure dans une zone partielle de l'endroit de brasage, les parties (1,2) ainsi accolées étant soudées avec un procédé de brasage classique, de sorte que la brasure s'étend sur l'ensemble de l'endroit de brasage.

4. Procédé selon l'une quelconque des revendications 1 à 3, **caractérisé en ce que** la température de l'arc amorce une activation de la surface des parties à assembler à l'endroit du dépôt.

5. Procédé selon l'une quelconque des revendications 1 à 4, **caractérisé en ce que** l'adhérence de la brasure déposée à la surface de la pièce s'effectue par des liaisons cohésives et/ou adhésives.

6. Procédé selon l'une quelconque des revendications 1 à 5, **caractérisé en ce que**, avec deux pièces à relier par la voie du brasage par capillarité, la brasure est déposée sous la forme de dépôt de brasage (3) de façon ponctuelle dans une zone à côté de la fente de brasage et les pièces sont reliées entre elles à la façon d'un soudage par le dépôt de soudage (3) ainsi formé et ensuite les pièces (1,2) sont soudées de façon classique, le matériau du dépôt de brasage (3) étant liquéfié et remplissant la fente de soudage de préférence par la pression de remplissage capillaire.

7. Procédé selon l'une quelconque des revendications 1 à 5, **caractérisé en ce que** le brasage des parties (1,2) ou pièces s'effectue par la voie du brasage au four ou soudage par résistance de préférence sous atmosphère de gaz protectrice.
